# EUROPÄISCHE PATENTSCHRIFT

(11) **EP 2 036 752 B1**
(45) Veröffentlichungstag und Bekanntmachung des Hinweises auf die Patenterteilung: **24.08.2016**
(21) Anmeldenummer: 08015361.2
(22) Anmeldetag: 30.08.2008
(51) Int. Cl.: B60J 7/12

(54) **Cabriolet-Fahrzeug mit einem flexiblen hinteren Dachbereich**
Convertible with a flexible rear roof section
Véhicule cabriolet doté d'une zone de toit arrière flexible

(30) Priorität: 06.09.2007 DE 102007042305
(43) Veröffentlichungstag der Anmeldung: 18.03.2009
(73) Patentinhaber: Valmet Automotive Oy, 23500 Uusikaupunki (FI)
(72) Erfinder: Hilbk, Holger, 49201 Dissen (DE)
(74) Vertreter: Kronthaler, Schmidt & Coll.

(56) Entgegenhaltungen:
- EP-A1- 0 189 649
- WO-A1-2005/095138
- DE-U1- 9 302 655

## Beschreibung

Die Erfindung betrifft ein Cabriolet-Fahrzeug mit einem beweglichen Dach, das zumindest in seinem hinteren Dachbereich mit einem flexiblen Bezug versehen und dort unterhalb einer Brüstungsebene der Karosserie angebunden ist, nach dem Oberbegriff des Anspruchs 1.

Aus der WO 2005/095138 A1 ist ein Cabriolet-Fahrzeug mit einem flexiblen Dach, einem sog. Softtop, bekannt, das im hinteren Bereich unterhalb einer Brüstungsebene der Karosserie in einem Verdeckaufnahmeraum angebunden ist. Des weiteren ist ein relativ zum Dachbezug bewegliches Spannelement vorgesehen, durch das der Bezug bei geschlossenem Dach in der Ebene der Karosseriebrüstung nach außen gegen eine Dichtung einer Kante der Karosserie gepresst werden kann. Damit wird am Bezug ablaufendes Wasser in dieser Karosseriebrüstungsebene zwischen der äußeren Dichtung und dem Bezug gesammelt und abgeführt. Insbesondere in längeren feuchten Phasen kann es hier zu Verschmutzungen und Moosbewuchs kommen, die dann, da sie in der Brüstungsebene liegen, von außen bei geschlossenem Dach sichtbar sind.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 11 angegeben.

Mit der Erfindung ist erreicht, dass am Bezug ablaufendes Wasser unter die Brüstungsebene geführt wird, so dass in der Brüstungsebene keine Linie mit stehendem Wasser und weiteren Verschmutzungen mehr verbleiben kann. Dennoch ist durch das Spannelement sichergestellt, dass trotz des verbleibenden Spalts zum umgebenden Karosseriebereich der Bezug bei geschlossenem Dach im Bereich der Brüstungsebene straff gespannt ist und einen auch optisch vorteilhaften geradlinigen Verlauf seiner Außenkontur zeigt.

Wenn der Spalt zwischen der Außenseite des Bezugs und einer gegenüber gelegenen Kante der Karosserie oder eines Deckel- oder Verkleidungsteils eine Breite von zumindest drei Millimetern aufweist, kann auch größeren Toleranzen Rechnung getragen werden und dennoch eine Wasserabführung nach unten auch noch bei Fahrzeugen sichergestellt werden, die schon einige Jahre alt sind und bei denen im Lauf der Zeit Dachgestängeteile ein größeres Spiel gegeneinander entwickelt haben oder die Bezugspannung nachgelassen hat.

Insbesondere umläuft der Spalt durchgängig den hinteren Dachbereich in Draufsicht C-förmig außenseitig, so dass über den gesamten hinteren Dachbereich die Wasserabführung sichergestellt ist. Dabei ist es optisch besonders günstig, wenn der Spalt über seinen Verlauf eine gleichmäßige Dicke aufweist. Die Dicke des Spalts sollte gleichzeitig nicht zu groß sein, damit Blätter oder andere Pflanzenteile möglichst nicht bis nach unten durchfallen, sondern oberhalb der Brüstungsebene verbleiben und vom Fahrtwind oder mit der Hand entfernt werden können.

Der Bezug kann weit unterhalb der sichtbaren Brüstungsebene angebunden sein, etwa fünfzehn bis dreißig Zentimeter unterhalb der Brüstungsebene der Karosserie. Die Gestaltungsmöglichkeiten der Designer sind dadurch voll erhalten. Auch ein geringerer Abstand zur Brüstungsebene, etwa nur fünf bis fünfzehn Zentimeter, ist je nach Fahrzeugform möglich. Das Dach kann je nach Anforderung auch tief und platzsparend im Aufnahmeraum liegen.

Günstig kann die Anbindung des Bezugs durch ein ein- oder mehrstückiges, in Draufsicht C-förmiges Halteprofil gebildet sein, so dass die Wasserabführung gleichmäßig über die untere Anbindung durchgeführt werden kann.

Für die Formgebung des geschlossenen Dachbezugs ist vorteilhaft als Spannelement zumindest ein Bügel vorgesehen ist, der beim Schließen des Daches innen am Bezug entlanggleitbar ist, zum Beispiel durch Integration des Bügels in das Dachkinematikgestänge. Gesonderte Steuerelemente sind dann nicht erforderlich. Es kann ein durchgehender Bügel über die gesamte Breite vorgesehen sein; alternativ sind auch einzelne Bügel seitlich eines unteren Heckscheibenrandes möglich.

Für ein einfaches Entlanggleiten des Bügels am Bezug kann der Bügel insbesondere als im Querschnitt rundes oder elliptisches Rohr ausgebildet ist.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische Seitenansicht eines erfindungsgemäßen Cabriolet-Fahrzeugs in nach vorne abgebrochener Darstellung bei geschlossenem Dach mit der Übersicht halber transparent eingezeichnetem Dachbezug und transparenter Karosserie,
- Fig. 2: eine Seitenansicht des Daches nach Fig. 1 während seiner Öffnung zur Ablage im Fahrzeugheck,

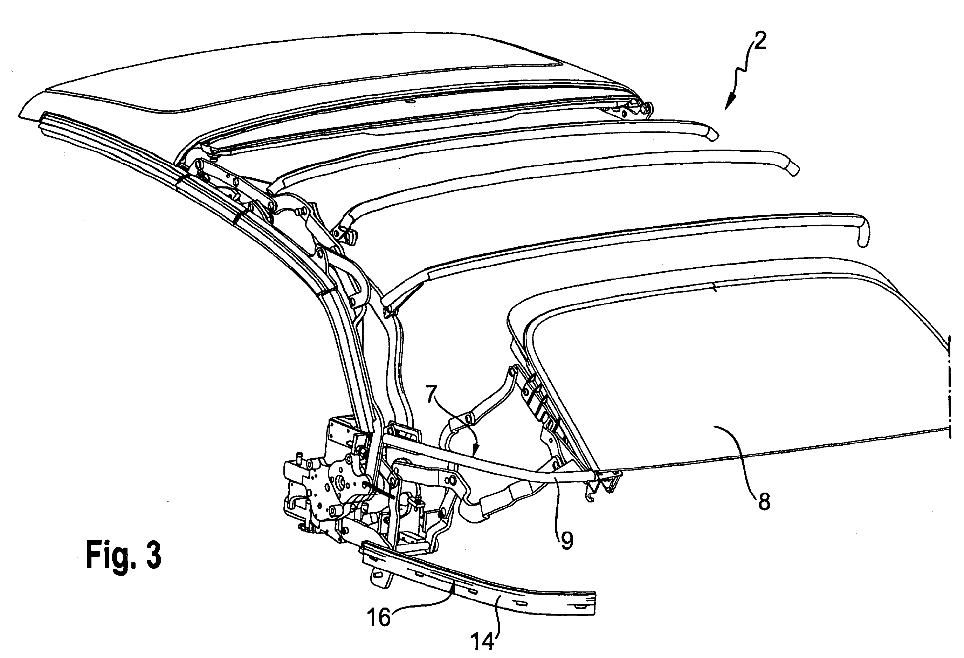

- Fig. 3: das geschlossene Dach nach Fig. 1 in herausgezeichneter Einzelteildarstellung, jedoch ohne Darstellung des Dachbezugs, in Ansicht von schräg links hinten,

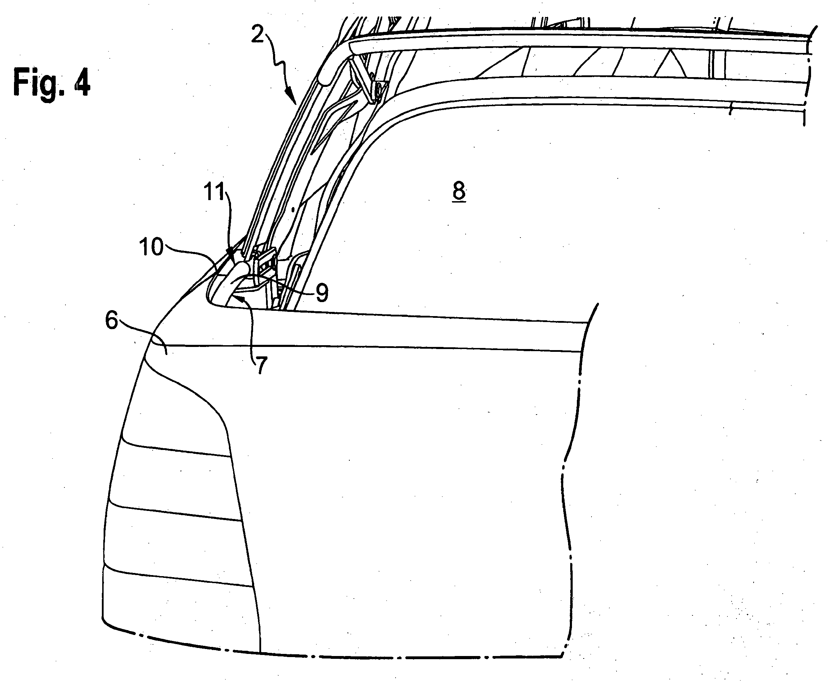

- Fig. 4: eine Ansicht auf die hinten links gelegene Dachecke, etwa entsprechend der Ansicht IV in Fig. 3, mit zusätzlich eingezeichneten umgebenden Karosseriebereichen,

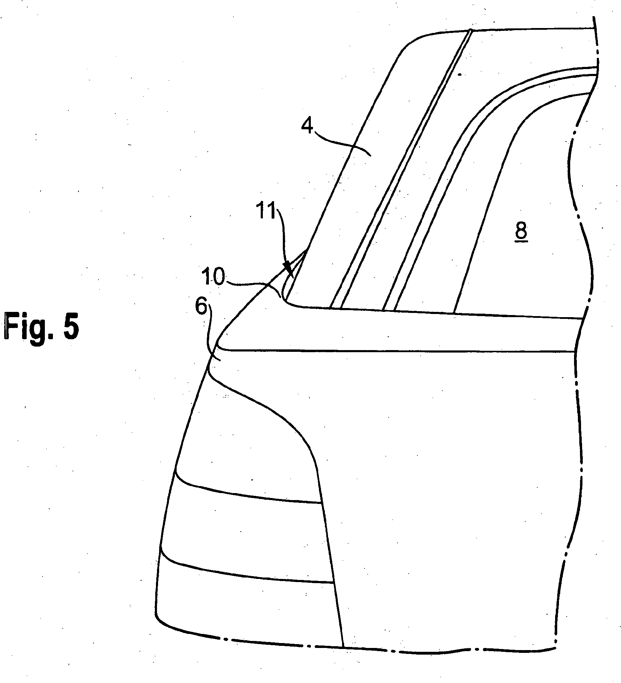

- Fig. 5: eine ähnliche Ansicht wie Fig. 4, jedoch mit zusätzlich eingezeichnetem Dachbezug,

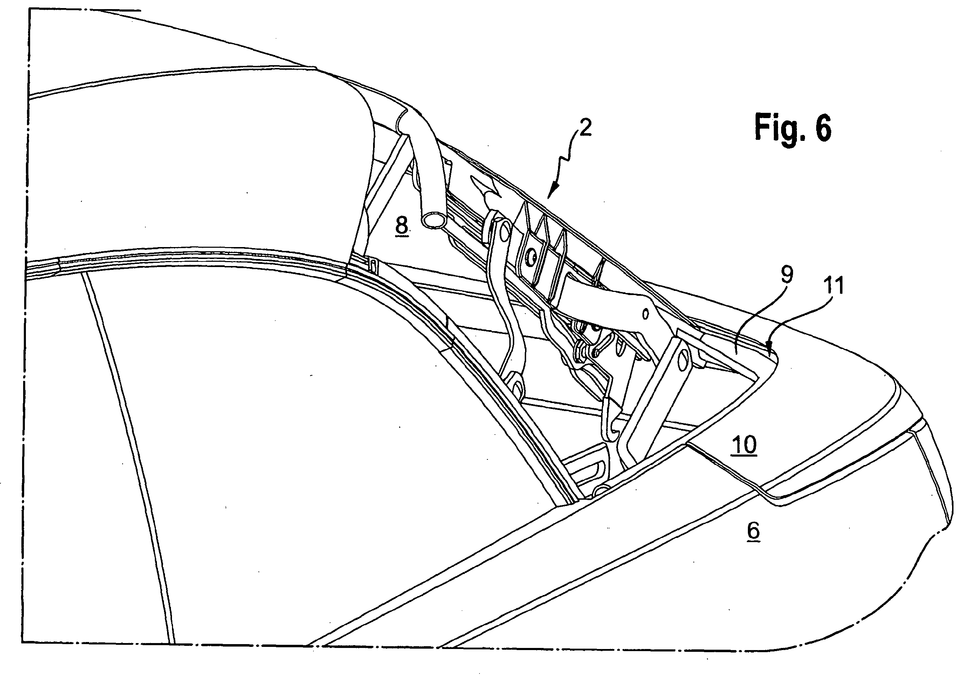

- Fig. 6: die hintere linke Dachecke in Ansicht von schräg vorne, wiederum ohne Dachbezug gezeichnet,
- Fig. 7: eine gegenüber Fig. 6 nur leicht gedrehte Ansicht mit zusätzlich eingezeichnetem Dachbezug und unterer Anbindung für diesen,
- Fig. 8: eine schematische Ansicht von vorne auf die Teile nach Fig. 7.

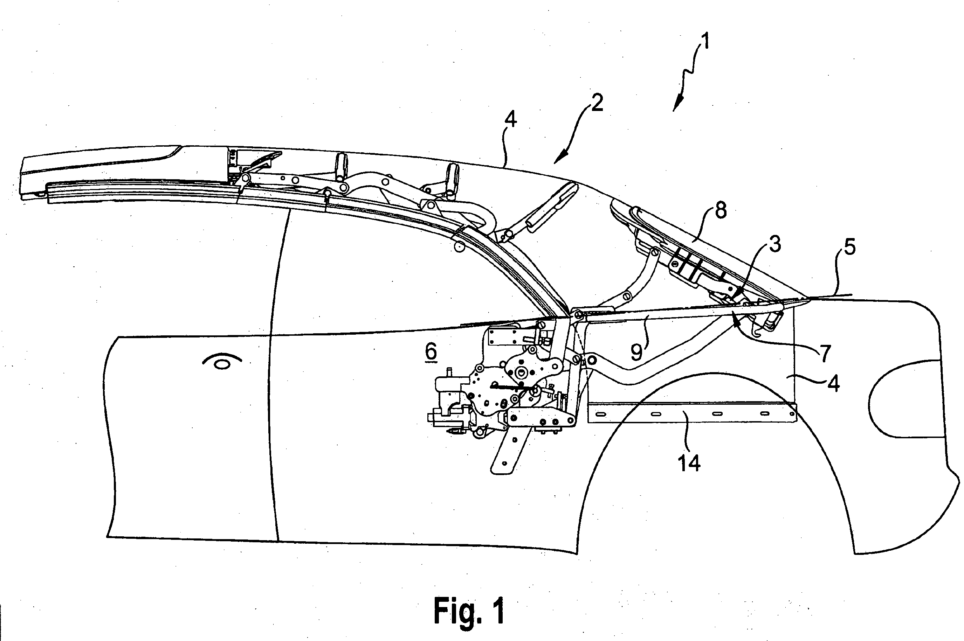

Das erfindungsgemäße Cabriolet-Fahrzeug 1 kann - wie in Fig. 1 angedeutet - ein mit zumindest einer Rückbank versehenes vier- oder mehrsitziges Fahrzeug sein. Auch ein Zweisitzer ist möglich. Dabei kann wie etwa bei Geländewagen, Kombis oder Vans ein Steilheck oder auch ein Stufen- oder Schrägheck vorgesehen sein.

In jedem Fall ist das hier insgesamt bewegliche und in geschlossener Stellung mittelbar oder unmittelbar an einen windschutzscheibenrahmen anschließende Dach 2 zumindest im Bereich seiner rückwärtigen Kante 3 mit einem flexiblen Bezug 4 versehen. Dieser ist unterhalb einer Brüstungsebene 5 - in Fig. 1 strichpunktiert angedeutet - an der Karosserie 6 angebunden. Für einen geradlinigen und faltenfreien Bezugverlauf bei geschlossenem Dach 2 ist dem hinteren Dachbereich zumindest ein Spannelement 7, hier zwei seitlich der Unterkante eines Heckfensters 8 gelegene Bügel 9, zugeordnet. Diese sind hier starr mit dem Rahmen des Heckfensters 8 verbunden und beaufschlagen den Bezug 4 bei geschlossenem Dach 2 im Bereich der Brüstungsebene 5 mit einer nach außen weisenden Komponente. Die Beaufschlagung kann sowohl nach quer außen als auch heckwärts erfolgen.

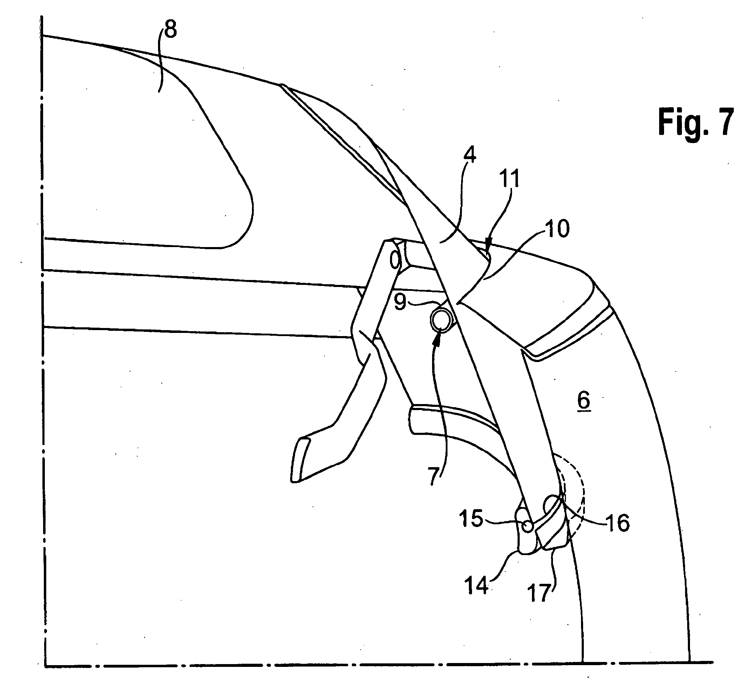

Die Kraftbeaufschlagung von dem Spannelement 7 ist dabei konstruktiv so bemessen, dass der Bezug 4 nur so weit nach außen bewegbar ist, dass zwischen diesem und einer außen gelegenen Kante 10 der Karosserie 6 oder eines umgebenden Deckel- oder Verkleidungsteils bei geschlossenem Dach 2 ein Spalt 11 verbleibt, wie etwa in Figur 7 zu sehen ist. Die Kante 10 kann dabei entweder karosseriefest oder selbst Bestandteil von beweglichen Klappen, Verkleidungsteilen oder ähnlichem sein.

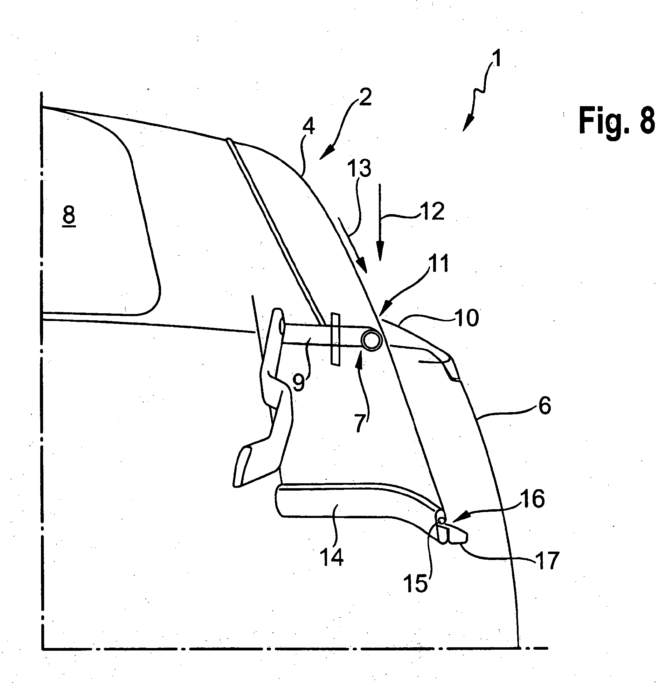

Dieser Spalt 11 weist eine Breite von zumindest drei Millimetern auf und umgibt vorteilhaft den hinteren Dachbereich hinter seitlichen Scheiben auf Höhe der Brüstungsebene 5 mit einem C-förmigen Verlauf außenseitig vollständig. Durch die Bemessung des verbleibenden Spalts 11 kann Spalt am Bezug 4 ablaufendes Wasser nach unten zu der Anbindung des Bezugs 4 in der Karosserie durchgeleitet werden. Im Bereich der Brüstungsebene 5 bleibt dann kein Wasser mehr stehen, so dass hier sichtbare Verschmutzung oder Moosbildung nahezu vollständig vermeidbar ist. Gleichzeitig ist der Spalt 11 jedoch so schmal, dass er in Ansicht von schräg oben nicht auffällt. Insbesondere bei einem Blick aus Richtung des Pfeils 12 (Fig. 8) ist der Spalt 11 von der äußeren Kante 10 überdeckt und damit optisch nicht störend. Erst bei einem Blick aus Richtung des Pfeils 13 - parallel zur Außenfläche des Bezugs 4 - wäre ein Einblick in den Spalt 11 möglich. Durch die schmale Ausbildung des Spalts 11 werden auch gröbere Verschmutzungen, wie etwa Blätter, nicht nach unten durchgeleitet.

Insbesondere weist der Spalt 11 über seinen gesamten Verlauf eine gleichmäßige Breite auf. Der Wasserablauf nach unten hin kann dann über den gesamten Bereich hinter seitlichen Scheiben, in dem der geschlossene Dachbezug 4 die Brüstungsebene 5 durchläuft, in gleicher Weise sichergestellt sein.

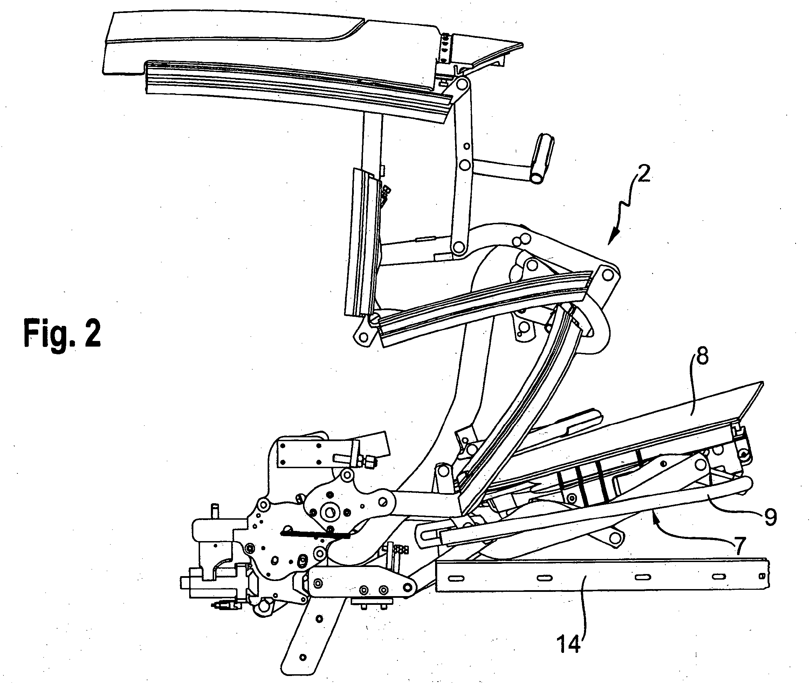

Wie im Übergang von Figur 1 zu Figur 2 zu sehen ist, bewegt sich das Spannelement 7 für den Bezug 4 bei der Dachablage mit diesem abwärts. Das Spannelement 7 ist hierfür im Hauptlager schwenkbar an die Dachkinematik angebunden und wird somit zwangsweise mit dieser bei der Dachöffnung abwärts bewegt. Dabei entspannt sich der Dachbezug 4. Die im Ausführungsbeispiel vorgesehenen beiden seitlichen Bügel 9, die hier zusammen mit dem unteren Ende der bis zur Unterkante 3 reichenden Heckscheibe 8 die Formgebung des hinteren Dachbereichs bestimmen, sind daher auch relativ zum Dachbezug 4 beweglich und gleiten beim Öffnen und insbesondere Schließen des Daches 2 innen am Bezug 4 entlang.

Um dies möglichst verschleißfrei oder verschleißarm zu ermöglichen, sind die Bügel 9 als glattwandige, im Querschnitt runde oder elliptische Rohre ausgebildet. Eine reibungsvermindernde Beschichtung ist möglich.

Alternativ zur hier gezeigten Ausführung ist es auch möglich, dass die Heckscheibe deutlich oberhalb der Unterkante 3 des Dachs 2 endet und ein Spannelement 7 über die ganze Breite des hinteren Dachbereichs durchgehend ausgebildet ist.

Die Anbindung des Bezugs 4 in der Karosserie 6 kann ein Stück weit unterhalb der Brüstungsebene 5 liegen, zum Beispiel etwa fünfzehn bis fünfundzwanzig Zentimeter. Dadurch kann das abgelegte Dach 2 mehr oder minder vollständig oberhalb dieser Anbindung liegen oder jedenfalls ermöglichen, dass in abgelegter Stellung der Bezug 4 nicht weiter als in geschlossener Dachstellung gespannt wird und damit keine Ausgleichselemente in diesen eingearbeitet werden müssen.

Für die Anbindung des Bezugs 4 in der Karosserie 6 ist hier ein mehrstückiges und in Draufsicht insgesamt etwa C-förmiges Halteprofil 14 vorgesehen. Dabei sind im gezeichneten Ausführungsbeispiel nur die äußeren Ecken dieses Halteprofils 14 ausgebildet, da unterhalb der Heckscheibe 8 kein Bezug mehr vorgesehen ist. Alternativ kann auch ein vollständig durchgehendes Halteprofil 14 vorgesehen sein, insbesondere dann, wenn unterhalb des Heckfensters 8 auch Bezuganteile liegen.

Wie insbesondere in den Figuren 7 und 8 sichtbar ist, kann der Bezug 4 über einen Keder 15 in einer Aufnahmenut 16 des Halteprofils 14 festgelegt sein, um damit eine gleichmäßige, über den Verlauf durchgehende Spannung zu erreichen.

Weiterhin ist dem Halteprofil 14 eine Wasserabführung 17 zugeordnet, die Staunässe verhindert. Da der Bezug 4 frei in der Aufnahmenut 16 hängt, kann von diesem das Wasser abtropfen, ohne dass irgendein Element mit der Außenseite des Bezugs in Kontakt stünde und damit einen Nässestau verursachen könnte. Eine Moosbewuchs oder ähnliche Folgeerscheinungen sind damit nicht nur im sichtbaren Bereich der Brüstungsebene 5, sondern auch im verdeckten Bereich der Bezuganbindung verhindert.

Gegenüber einem frei zur unteren Anbindung durchlaufenden Bezug 4 bildet die erfindungsgemäße Ausbildung neben der optisch gestrafften und gleichmäßigen Bezugspannung den weiteren Vorteil, dass der Bezug 4 mit der rückseitigen Unterstützung im Bereich der Brüstungsebene 5 auch bei kleiner Breite des Spalts 11 nicht an die außen gegenüberliegende Kante 10 anschlagen kann, wie dies bei einem auf dieser Höhe nicht unterstützten Bezug 4 möglich wäre. Dadurch werden auch punktuelle Verschmutzungen verhindert und auch die Geräuschbildung während der Fahrt minimiert.

## Patentansprüche

1. Cabriolet-Fahrzeug (1) mit einem beweglichen Dach (2), das zumindest in seinem hinteren Dachbereich mit einem flexiblen Bezug (4) versehen und dort unterhalb einer Brüstungsebene (5) der Karosserie (6) angebunden ist; wobei dem hinteren Dachbereich zumindest ein Spannelement (7) zugeordnet ist, von dem der Bezug (4) bei geschlossenem Dach (2) im Bereich der Brüstungsebene (5) mit einer nach außen weisenden Komponente beaufschlagbar ist,
**dadurch gekennzeichnet,**
**dass** von dem Spannelement (7) der Bezug (4) nur derart weit nach außen bewegbar ist, dass zwischen diesem und einer außen gelegenen Kante (10) der Karosserie oder eines umgebenden Deckel- oder Verkleidungsteils bei geschlossenem Dach (2) ein Spalt (11) verbleibt.

2. Cabriolet-Fahrzeug (1) nach Anspruch 1,
**dadurch gekennzeichnet,**
**dass** der Spalt (11) eine Breite von zumindest drei Millimetern aufweist.

3. Cabriolet-Fahrzeug (1) nach einem der Ansprüche 1 oder 2,
**dadurch gekennzeichnet,**
**dass** der Spalt (11) den hinteren Dachbereich in Draufsicht C-förmig außenseitig umläuft.

4. Cabriolet-Fahrzeug (1) nach einem der Ansprüche 1 bis 3,
**dadurch gekennzeichnet,**
**dass** der Spalt (11) über seinen verlauf eine gleichmäßige Breite aufweist.

5. Cabriolet-Fahrzeug (1) nach einem der Ansprüche 1 bis 4,
**dadurch gekennzeichnet,**
**dass** durch den Spalt (11) am Bezug (4) ablaufendes Wasser nach unten zu der Anbindung des Bezugs durchleitbar ist.

6. Cabriolet-Fahrzeug (1) nach einem der Ansprüche 1 bis 5,
**dadurch gekennzeichnet,**
**dass** der Bezug (4) fünf bis dreißig Zentimeter unterhalb der Brüstungsebene (5) der Karosserie (6) an diese angebunden ist.

7. Cabriolet-Fahrzeug (1) nach einem der Ansprüche 1 bis 6,
**dadurch gekennzeichnet,**
**dass** die Anbindung des Bezugs (4) durch ein ein- oder mehrstückiges, in Draufsicht C-förmiges Halteprofil (14) gebildet ist.

8. Cabriolet-Fahrzeug (1) nach Anspruch 7,
**dadurch gekennzeichnet,**
**dass** der Bezug (4) über einen Keder (15) in einer Aufnahmenut (16) des Halteprofils (14) festgelegt ist.

9. Cabriolet-Fahrzeug (1) nach einem der Ansprüche 7 oder 8,
**dadurch gekennzeichnet,**
**dass** dem Halteprofil (14) eine Wasserabführung (17) zugeordnet ist.

10. Cabriolet-Fahrzeug (1) nach einem der Ansprüche 1 bis 9,
**dadurch gekennzeichnet,**
**dass** als Spannelement (7) zumindest ein Bügel (9) vorgesehen ist, der beim Schließen des Daches (2) innen am Bezug (4) entlanggleitbar ist.

11. Cabriolet-Fahrzeug (1) nach Anspruch 10,
**dadurch gekennzeichnet,**
**dass** der Bügel (9) als im Querschnitt rundes oder elliptisches Rohr ausgebildet ist.

## Claims

1. A convertible vehicle (1) with a movable roof (2) which is provided with a flexible cover (4) at least in its rear roof area and is connected there below a sill level (5) of the vehicle body (6), said rear roof area having at least one tightening element (7) associated with it, which can apply an outwardly directed component to the cover (4) in the region of the sill level (5) when the roof (2) is closed,
**characterised in that**
the cover (4) can be moved outward by the tightening element (7) only to the extent that a gap (11) remains between the cover (4) and an outer edge (10) of the vehicle body or of a surrounding cover or trim part when the roof (2) is closed.

2. The convertible vehicle (1) according to claim 1, **characterised in that** the gap (11) is at least three millimetres wide.

3. The convertible vehicle (1) according to any one of claims 1 or 2, **characterised in that** the gap (11) extends around the outside of the rear roof area in a C-shaped manner when viewed from above.

4. The convertible vehicle (1) according to any one of claims 1 to 3, **characterised in that** the gap (11) has a constant width over its entire extent.

5. The convertible vehicle (1) according to any one of claims 1 to 4, **characterised in that** water running off the cover (4) through the gap (11) can be guided down to the connection of the cover.

6. The convertible vehicle (1) according to any one of claims 1 to 5, **characterised in that** the cover (4) is connected to the vehicle body (6) five to thirty centimetres below the sill level (5).

7. The convertible vehicle (1) according to any one of claims 1 to 6, **characterised in that** the connection of the cover (4) is formed by a single- or multi-piece retaining profile (14) which is C-shaped when viewed from above.

8. The convertible vehicle (1) according to claim 7, **characterised in that** the cover (4) is fixed in a receiving groove (16) of the retaining profile (14) via a strip (15).

9. The convertible vehicle (1) according to any one of claims 7 or 8, **characterised in that** the retaining profile (14) has a drainage (17) associated with it.

10. The convertible vehicle (1) according to any one of claims 1 to 9, **characterised in that** at least one bracket (9) is provided as the tightening element (7), which can slide along the inside of the cover (4) during the closing of the roof (2).

11. The convertible vehicle (1) according to claim 10, **characterised in that** the bracket (9) has a cross-section in the form of a round or elliptical tube.

## Revendications

1. Véhicule cabriolet (1) avec un toit déplaçable (2), ledit toit (2) présentant une enveloppe flexible (4) au moins dans sa région de toit arrière et étant relié là au-dessous d'un plan de parapet (5) de la carrosserie (6), au moins un élément de serrage 7) étant associé avec ladite région de toit arrière, cet élément de serrage (7) pouvant appliquer sur ladite enveloppe (4) un composant dirigé vers l'extérieur dans la région du plan de parapet (5) lorsque le toit (2) est fermé,
**caractérisé en ce que**
ladite enveloppe (4) est déplaçable vers l'extérieur par ledit élément de serrage (7) seulement jusqu'à laisser une fente (11) reste entre l'enveloppe (4) et un bord extérieur (10) de la carrosserie ou d'un élément de couverture ou d'habillage entourant lorsque le toit (2) erst fermé.

2. Véhicule cabriolet (1) selon la revendication 1, **caractérisé en ce que** la fente (11) présente une largeur d'au moins trois millimètres.

3. Véhicule cabriolet (1) selon l'une quelconque des revendications 1 ou 2, **caractérisé en ce qu** la fente (11), vue de dessus, entoure la région de toit arrière extérieurement en forme d'un C.

4. Véhicule cabriolet (1) selon l'une quelconque des revendications 1 à 3, **caractérisé en ce que** la fente (11) présente une largeur constante sur tout son tracé.

5. Véhicule cabriolet (1) selon l'une quelconque des revendications 1 à 4, **caractérisé en ce que** de l'eau s'écoulant de l'enveloppe (4) à travers la fente (11) peut être guidée vers le bas, vers la liaison de l'enveloppe.

6. Véhicule cabriolet (1) selon l'une quelconque des revendications 1 à 5, **caractérisé en ce que** l'enveloppe (4) est reliée à la carrosserie (6) cinq à trente centimètres au-dessous du plan de parapet (5) de la carrosserie (6).

7. Véhicule cabriolet (1) selon l'une quelconque des revendications 1 à 6, **caractérisé en ce que** la liaison de l'enveloppe (4) est constituée par un profil de maintien (14) en une seule pièce ou en plusieurs pièces, qui présente la forme d'un C en vue de dessus.

8. Véhicule cabriolet (1) selon la revendication 7, **caractérisé en ce que** l'enveloppe (4) est fixée dans une rainure de logement (16) du profil de maintien (14) par un bourrelet (15).

9. Véhicule cabriolet (1) selon l'une quelconque des revendications 7 ou 8, **caractérisé en ce que** le profil de maintien (14) est associé avec un conduit d'écoulement (17).

10. Véhicule cabriolet (1) selon l'une quelconque des revendications 1 à 9, **caractérisé en ce que** l'on prévoit au moins un étrier (9) en tant qu'élément de serrage (7) qui peut glisser à l'intérieur de l'enveloppe (4) lors de la fermeture du toit (2).

11. Véhicule cabriolet (1) selon la revendication 10, **caractérisé en ce que** l'étrier (9) présente une section transversale sous forme d'un tuyau rond ou elliptique.
